# EUROPEAN PATENT APPLICATION

(11) **EP 1 424 573 A2**
(43) Date of publication of application: **02.06.2004**
(21) Application number: 03257421.2
(22) Date of filing: 25.11.2003
(51) Int. Cl.: G02B 5/18

(54) **An anti-reflective structure**

(30) Priority: 28.11.2002 JP 2002345975
(71) Applicant: ALPS ELECTRIC CO., LTD., Ota-ku Tokyo 145 (JP)
(72) Inventor: Fukuda, Tetsuya, Ota-ku Tokyo 145 (JP); Honda, Kenji, Ota-ku Tokyo 145 (JP); Aoki, Daigo, Ota-ku Tokyo 145 (JP); Ishibashi, Naohiro, Ota-ku Tokyo 145 (JP); Naito, Koichi, Ota-ku Tokyo 145 (JP); Ishitaka, Yoshihiko, Ota-ku Tokyo 145 (JP)
(74) Representative: Kensett, John Hinton

(57) **Abstract**

An anti-reflective film (17) has an anti-reflective structure having many micro holes (19) extending from a reference surface (18a) (first surface) in the thickness direction of the film. Each of the holes has an opening (20a) exposed at the reference surface, and a bottom (20b) facing a second surface (18b) on the attachment side. Light incident on the anti-reflective film is mostly introduced into the holes through the openings and diffused by the bottoms, thereby avoiding reflection at a predetermined angle. The ratio of a connecting surface which reflects light is suppressed to increase the ratio of the openings, thereby maximizing the anti-reflective ability of the anti-reflective structure.

## Description

### BACKGROUND OF THE INVENTION

### 1. Field of the Invention

The present invention relates to an anti-reflective structure used for an illuminating device for illuminating a liquid crystal display unit, an anti-reflective film, a light guide and a liquid crystal display device each comprising the anti-reflective structure, and a mold and method for forming the anti-reflective film.

### 2. Description of the Related Art

A conventional known light guide plate comprises an anti-reflective film, and a known liquid crystal display device comprises the light guide plate used as a front light. By providing the anti-reflective film, external light or illuminating light of an illuminating device provided on the surface of a liquid crystal display unit can be prevented from being reflected before reaching the liquid crystal display unit. Thus, the anti-reflective film is advantageous for effective incidence of the external light or the illuminating light on the liquid crystal display unit, thereby improving the visibility of a liquid crystal display device. As an example of this type of anti-reflective structure, an anti-reflective film having many micro protrusions referred to as an "anti-reflective (AR) lattice" formed on its surface is known. The AR lattice can prevent the reflection of the external light or the illuminating light before incidence on the liquid crystal display unit (refer to, for example, Japanese Unexamined Patent Application Publication No. 2002-350849).

Although the conventional anti-reflective structure has the micro protrusions formed on its surface, a new anti-reflective structure aimed at an excellent anti-reflective effect is being studied by a different approach. There is also demand for an anti-reflective structure having a proper anti-reflective ability according to application.

### SUMMARY OF THE INVENTION

Accordingly, the present invention has been achieved in consideration of the above-described situation, and it is an object of the present invention to provide an anti-reflective structure capable of preventing the reflection of external light or illuminating light to significantly improve the visibility of a display portion displayed with the external light or illuminating light, an anti-reflective film, a light guide and a liquid crystal display device each comprising the anti-reflective structure, and a mold and method for forming the anti-reflective film.

In order to achieve the object, an anti-reflective structure of the present invention comprises many micro holes each having an opening at a first surface and a bottom facing a second surface opposite to the first surface, each hole extending from the opening to the bottom.

In the anti-reflective structure, discontinuity at the interface between the structural material and air can be relieved by the many micro holes to effectively prevent light reflection in a predetermined direction. Since the anti-reflective structure has only the micro holes formed in the first surface, the anti-reflective structure can be effectively produced at low cost. The anti-reflective structure of the present invention has the many holes formed over the first surface without protrusions from the first surface, and thus the possibility of a decrease in anti-reflective ability is avoided even if pressure is applied to a region where the anti-reflective structure is formed.

The ratio of the openings to the whole of the first surface is preferably set to 75% to 85% per unit area. The ratio of a connecting surface which causes discontinuity at the interface between the structural material and air can be decreased by increasing the opening area ratio of the holes to suppress light reflection in one direction, thereby improving the anti-reflective ability of the anti-reflective structure. The reflectance of the anti-reflective structure is preferably set to 1% or less. For example, when the anti-reflective structure of the present invention is applied to a liquid crystal display device with a reflectance set to 1% or less, a decrease in visibility due to reflection can be mostly avoided.

The bottom of each hole preferably has a quadratic surface. When the bottom of each hole has the quadratic surface without a flat surface, incident light is not strongly reflected in one direction, thereby significantly improving the anti-reflective ability of the anti-reflective structure. The opening of each hole is preferably formed in a polygonal shape. Also, the holes are preferably disposed in a staggered arrangement. When the holes each having the polygonal opening are disposed in a staggered arrangement, the connecting surface which reflects light can be mostly removed from the first surface of the anti-reflective structure. Also, when the holes are disposed in a staggered arrangement, the holes can be formed with the highest density in the first surface. The anti-reflective ability can be significantly improved by increasing the formation density of the holes.

By using an anti-reflective film having the above-described anti-reflective structure formed on at least one of the front face and the rear face of the film, an anti-reflective property can easily be imparted to a light guide or a display device by simply attaching the anti-reflective film to the surface of the light guide or the display device.

The present invention also provides a light guide comprising an anti-reflective structure having many micro holes each having an opening at a first surface and a bottom facing a second surface opposite to the first surface, each hole extending from the opening to the bottom, and a reflective structure having many micro grooves formed along the second surface. In the light guide, refractive index discontinuity can be relieved by the many micro holes to effectively prevent light reflection in a predetermined direction. Since the light guide has the reflective surface and the anti-reflective structure, both of which are integrally formed, the number of the component members can be decreased when the light guide is applied to a front light or the like.

By applying the light guide to an illuminating device, the illuminating device capable of preventing surface reflection can be realized. The illuminating device may be combined with a liquid crystal display unit to form a liquid crystal display device. By applying the illuminating device to the liquid crystal display device, the liquid crystal display device having decreased surface reflection, high contrast, and excellent visibility can be provided.

The prevent invention also provides a mold for forming an anti-reflective film comprising an anti-reflective structure having many micro holes each having an opening at a first surface and a bottom facing a second surface opposite to the first surface, each hole extending from the opening to the bottom. The mold for forming the anti-reflective film comprises a first inner surface for forming the first surface, a second inner surface for forming the second surface, and many micro protrusions protruding from the first inner surface to the second inner surface so as to pattern the outlines of the holes. The mold for forming the anti-reflective film facilitates the formation of the anti-reflective film and is capable of producing the anti-reflective film having the anti-reflective structure with the excellent anti-reflective ability. The protrusions are preferably disposed in a staggered arrangement. Embodiments of the present invention will now be described, by way of example, with reference to the accompanying diagrammatic drawings, in which:
Fig. 1 is a sectional view of a liquid crystal display device comprising an illuminating device having an anti-reflective structure according to an embodiment of the present invention;
Fig. 2 is an enlarged perspective view showing an anti-reflective film having an anti-reflective structure according to the present invention;
Fig. 3 is an enlarged sectional view of the anti-reflective film shown in Fig. 2;
Fig. 4 is an enlarged perspective view showing a reflective layer;
Fig. 5 is a sectional view showing a mold for forming an anti-reflective film of the present invention;
Fig. 6 is a sectional view showing a light guide of the present invention;
Fig. 7 is a sectional view showing an anti-reflective structure according to another embodiment of the present invention;
Fig. 8 is a sectional view showing an anti-reflective structure according to a further embodiment of the present invention;
Fig. 9 is a graph showing the results of verification of an anti-reflective structure of the present invention;
Fig. 10 is a graph showing the results of verification of an anti-reflective structure of the present invention;
Fig. 11 is a graph showing the results of verification of an anti-reflective structure of the present invention;
Fig. 12 is a graph showing the results of verification of an anti-reflective structure of the present invention; and
Fig. 13 is an enlarged picture of an anti-reflective film having an anti-reflective structure of the present invention.

### DESCRIPTION OF THE PREFERRED EMBODIMENTS

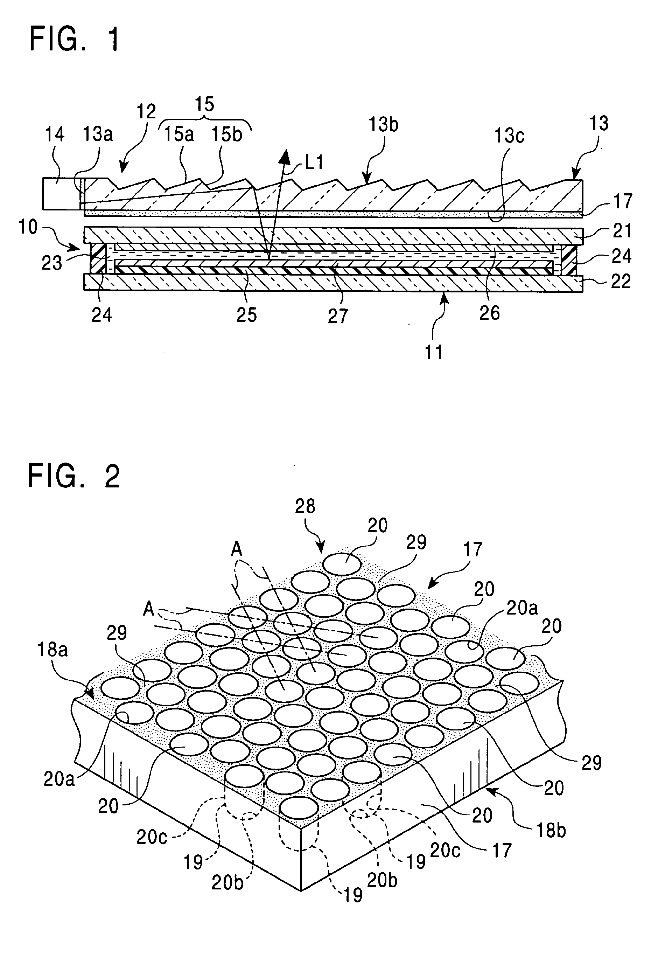

An embodiment of the present invention will be described below with reference to the drawings. Fig. 1 is a sectional view showing a liquid crystal display device comprising an illuminating device having an anti-reflective structure according to an embodiment of the present invention. The liquid crystal display device 10 of this embodiment comprises a reflective liquid crystal display unit 11, and a front light (illuminating device) 12 disposed on the front face (top face) of the liquid crystal display unit 11.

As shown in Fig. 1, the front light 12 functions as an illuminating device according to an embodiment of the present invention and comprises a light guide plate (light guide) 13, and a light source 14. The light guide plate (light guide) 13 is a substantially plate-shaped transparent member made of, for example, an acrylic resin or polycarbonate resin. The light guide plate 13 comprises an incidence surface 13a on which light of the light source 14 is incident, and an observation surface 13b through which the liquid crystal display unit 11 is observed from the outside. The observation surface 13b has many micro triangular grooves 15 of a wedge shape which are formed for changing the direction of light incident from the light source 14. The bottom surface (facing the liquid crystal display device 10) of the light guide plate 13 functions as an emission surface 13c through which illuminating light is emitted.

Each of the wedge grooves 15 formed in the observation surface 13b comprises a pair of inclined surfaces. One of the inclined surfaces of each groove 15 is a gently inclined surface 15a, and the other is a reflective surface (steeply inclined surface) 15b formed at a greater inclination angle than that of the gently inclined surface 15a. Namely, in the observation surface 13b, the gently inclined surfaces 15a and the reflective surfaces 15b are alternately formed. The shape of the observation surface 13b is not limited to the above shape, and any shape may be used as long as light incident on the incidence surface 13a and propagated through the light guide plate 13 can be uniformly guided to the emission surface 13c.

Furthermore, an anti-reflective film 17 having an anti-reflective structure 28 of the present invention is attached to the emission surface 13c of the light guide plate 13. Fig. 2 is an enlarged perspective view of the anti-reflective film 17. The anti-reflective film 17 has the anti-reflective structure 28 comprising many micro holes 19 extending from a first surface functioning as a reference surface 18a in the thickness direction of the anti-reflective film 17. Each of the holes 19 has an opening 20a exposed in the reference surface 18a, a peripheral wall 20c continued from the opening 20a, and a bottom 20b formed near a second surface functioning as an attachment surface 18b. The anti-reflective film 17 is attached to the emission surface 13c of the light guide plate 13 with the attachment surface 18b turned upward. Although Fig. 2 shows the anti-reflective film 17 with the reference surface 18a facing upward, the reference surface 18a faces downward during attachment.

The ratio of the openings 20a to the whole of the reference surface 18a is preferably as higher than that of the connecting surface 29 (the flat portion of the reference surface 18a excepting the openings 20a) for connecting together the peripheries of the adjacent openings 20a as possible. The reflectance increases as the ratio of the connecting surface 29 increases. The ratio of the openings 20a to the whole of the reference surface 18a is set to, for example, 75% to 85%, and the ratio of the connecting surface 29 between the adjacent openings 20a is set to, for example, 15% to 25%.

In order to form as many holes 19 as possible in the anti-reflective film 17, the holes 19 are preferably disposed in a staggered arrangement in the reference surface 18a, as shown by broken lines A in Fig. 2. In the staggered arrangement of the holes 19, the holes 19 can be formed with the highest density in the anti-reflective film 17.

In a shape having a hole pitch of about a half or less of the wavelength, the more the refractive index spatial distribution formed by the connecting surface 29 and air becomes continuous, the more the reflection of light incident on the reference surface 18a of the anti-reflective film 17 is prevented. Therefore, the anti-reflective function of the anti-reflective film 17 can be maximized by increasing the ratio of the openings 20a while suppressing the ratio of the connecting surface 29, which reflects light, to the reference surface 18a.

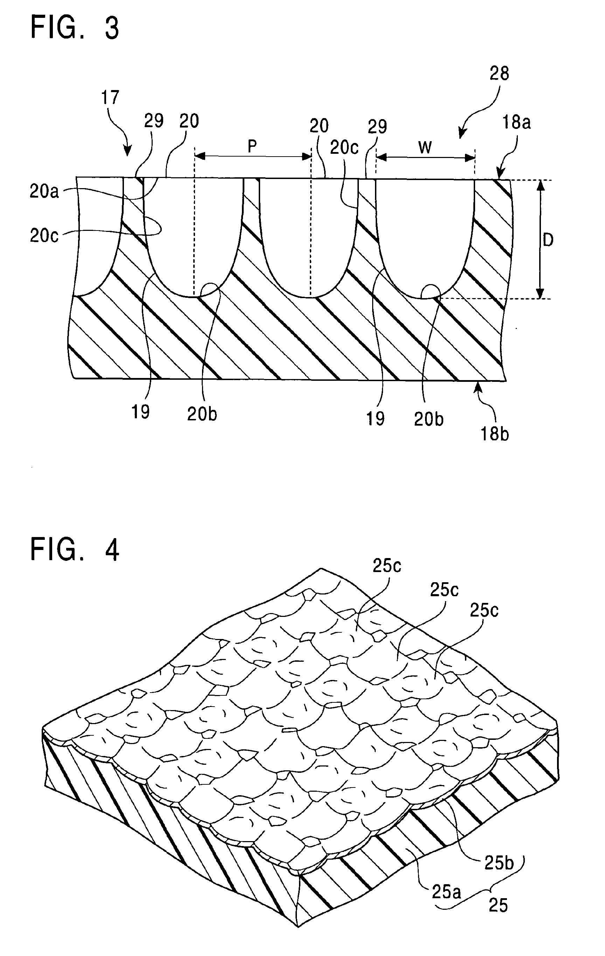

Fig. 3 is an enlarged sectional view of the anti-reflective film 17. The bottom 20b of each hole 19 is preferably formed in a quadratic surface comprising a continuously curved surface. If the bottom 20b of each hole 19 has a flat portion, the anti-reflective function deteriorates due to the refractive index discontinuity at the interface between the structural material and air. When the bottoms 20b are formed in quadratic surfaces, the refractive index spatial distribution formed by the structural material and air has a continuous change, thereby decreasing reflectance. Also, the maximum diameter W of the opening 20a of each hole 19 having a circular shape is preferably as small as possible. With the openings 20a each having the large maximum diameter W, reflected and diffracted light occurs to produce colored reflected light. The occurrence of the reflected and diffracted light can be prevented by decreasing the maximum diameter W of the openings 20a to improve the anti-reflective function. With the openings 20a each having the large maximum diameter W, the shape reproducibility of the anti-reflective film 17 at the time of formation possibly deteriorates, while with the openings 20a each having the small maximum diameter W, the anti-reflective ability possibly deteriorates.

In order to decrease the ratio of the connecting surface 29, the formation pitch P of the holes 19 is preferably decreased as much as possible. When the ratio of the connecting surface 29, which reflects light, is decreased to permit the holes 19 to be closely formed, the anti-reflective function of the anti-reflective film 17 can be maximized. With the holes 19 having the formation pitch P of over 0.5 µm, the tone of emitted light appears to be colored due to the spectroscopic function of diffracted light. The formation pitch P of the holes 19 is preferably 0.5 µm or less. For example, the formation pitch P is set to 0.10 µm to 0.25 µm, preferably 0.10 µm to 0.20 µm. The depth D of each hole 19 is set to, for example, 150 nm to 400 nm. Although the holes 19 are preferably as deep as possible, with the excessively deep holes 19, the formation reproducibility of the holes 19 deteriorates at the time of the formation of the anti-reflective film 17. The bottom 20b of each hole 19 preferably has little flat portion. When the bottom 20b of each hole 19 has a flat surface, the anti-reflective function of the anti-reflective film 17 deteriorates. In order to improve the anti-reflective ability, it is important to form the bottom 20b of each hole 19 in a smooth quadratic surface.

The reflectance of the anti-reflective film 17 having the above-described construction is suppressed to, for example, 1% or less. The anti-reflective film 17 may be formed by injection molding using a mold having protrusions formed on the inner surface for patterning the holes 19. As the material for forming the anti-reflective film 17, for example, a silicone resin having high transmissivity may be used.

Referring to Fig. 1, the light source 14 is disposed adjacent to the incidence surface 13a of the light guide plate 13. The light source 14 is, for example, a rod-shaped light source provided along the incidence surface 13a of the light guide plate 13. For example, the light source 14 may comprise a light emitting device such as white LED (Light Emitting diode) or the like provided at one or both ends of a rod-shaped light guide. Any light source may be used without a problem as long as light can be incident on the incidence surface 13a of the light guide plate 13. For example, a plurality of light emitting devices such as LEDs or the like may be disposed along the incidence surface 13a of the light guide plate 13.

The liquid crystal display unit 11 constituting the liquid crystal display device 10 comprises a liquid crystal layer 23 held between an upper substrate 21 and a lower substrate 22 opposing each other. The liquid crystal layer 23 is sealed by a sealing material 24 provided in a frame-like shape along the inner peripheries of the substrates 21 and 22. Furthermore, a liquid crystal control layer 26 is formed on the inner surface (the lower substrate side) of the upper substrate 21, and a reflective layer 25 containing a metal thin film is formed on the inner surface (the upper substrate side) of the lower substrate 22, for reflecting illuminating light of the front light 12 or external light. Furthermore, a liquid crystal control layer 27 is formed on the surface of the reflective layer 25.

The liquid crystal control layers 26 and 27 include an electrode for controlling a drive of the liquid crystal layer 23, an alignment film, a semiconductor element for switching the electrode, and the like. The liquid crystal control layers 26 and 27 may further comprise a color filter.

The liquid crystal display unit 11 shown in Fig. 1 is a reflective type in which the illuminating light incident from the front light 12 or external light incident from the outside is reflected by the reflective layer 25 to perform a display. As shown in Fig. 4, the reflective layer 25 comprises, for example, an organic film 25a made of an acrylic resin or the like having irregularities formed in its surface, and a reflective film 25b deposited on the organic film 25a. The reflective film 25b preferably comprises a high-reflectance metal thin film of aluminum, silver, or the like. Furthermore, a planarizing film comprising a silicone resin is preferably formed on the surface of the reflective film 25b, for planarizing the surface irregularities.

Each of the recesses 25c of the reflective layer 25 is preferably formed in a gently curved surface such as a spherical surface, a combination of the curved surface and a flat surface, or the like. The inclination angle, the pitch and depth of the recesses of the inner surface are controlled so that the reflective layer 25 has appropriate reflection properties suitable for the design of an electronic apparatus comprising the liquid crystal display device 10 as a display part. The reflective layer 25 is advantageous for effective reflection of incident light, thereby permitting a high-luminance display. Also, the reflective layer 25 can prevent regular reflection of external light used as incident light to realize a bright display having excellent visibility.

The operation of the anti-reflective film of the present invention having the above-described construction will be mainly described with reference to Fig. 1. When the light source 14 is lighted for illuminating the liquid crystal display unit 11, light emitted from the light source 14 is introduced into the light guide plate 13 through the incidence surface 13a of the light guide plate 13. The light is propagated through the light guide plate 13 and reaches the reflective surface 15b to change the optical path of the light propagated through the light guide plate 13, and then the light is uniformly guided to the emission surface 13c. The light emitted from the emission surface 13c is incident on the anti-reflective film 17 through the attachment surface 18b in contact with the emission surface 13c. Since the anti-reflective film 17 has the many holes 19 formed in the reference surface 18a to extremely decrease the ratio of the connecting surface 29, as described above, the light incident on the anti-reflective film 17 is little reflected by the reference surface 18a. The light incident on the anti-reflective film 17 is not strongly reflected in one direction because the anti-reflective film 17 has the holes 19 each having a smooth quadratic surface. Thus, the light incident on the anti-reflective film 17 is effectively incident on the liquid crystal display unit 11. The light incident on the liquid crystal display unit 11 is reflected by the reflective layer 25, and emitted as projection light of a character or image displayed on the liquid crystal display unit 11 from the liquid crystal display unit 11.

The light emitted from the liquid crystal display unit 11 is incident on the anti-reflective film 17 from the reference surface 18a of the anti-reflective film 17. The light incident on the anti-reflective film 17 is effectively introduced into the light guide plate 13 (refer to an arrow L in Fig. 1). Therefore, the quantity of the light reflected again by the surface of the anti-reflective film 17 and returned to the liquid crystal display unit 11 can be significantly decreased. The reflectance of the anti-reflective film 17 is suppressed to, for example, 1% or less. The observer can observe the sharp and bright projection light of a character or image displayed on the liquid crystal display unit 11 through the light guide plate 13.

Since the anti-reflective film 17 has the many holes 19 formed in the reference surface 18a in order to extremely decrease the ratio of the connecting surface 29 (the flat portion of the reference surface 18a excepting the openings 20a), light from the liquid crystal display unit 11 can be mostly transmitted without being reflected by the surface, thereby significantly improving the visibility of the liquid crystal display unit 11. Also, even when the quantity of light emitted from the light source 14 is decreased to some extent, the liquid crystal display unit 11 can be effectively illuminated to contribute to saving of a battery.

Also, the anti-reflective film 17 has the anti-reflective effect on the light incident from the attachment surface 18b. Namely, the bottom 20b of each hole 19 has a quadratic surface with substantially no flat surface, and thus light incident on the rear sides of the bottoms 20b can be prevented from being reflected in one direction. Therefore, the light incident on the anti-reflective film 17 from the light guide plate 13 is effectively emitted from the reference surface 18a without being reflected to the inside of the anti-reflective film 17 by the reference surface 18a, thereby permitting bright illumination of the liquid crystal display unit 11.

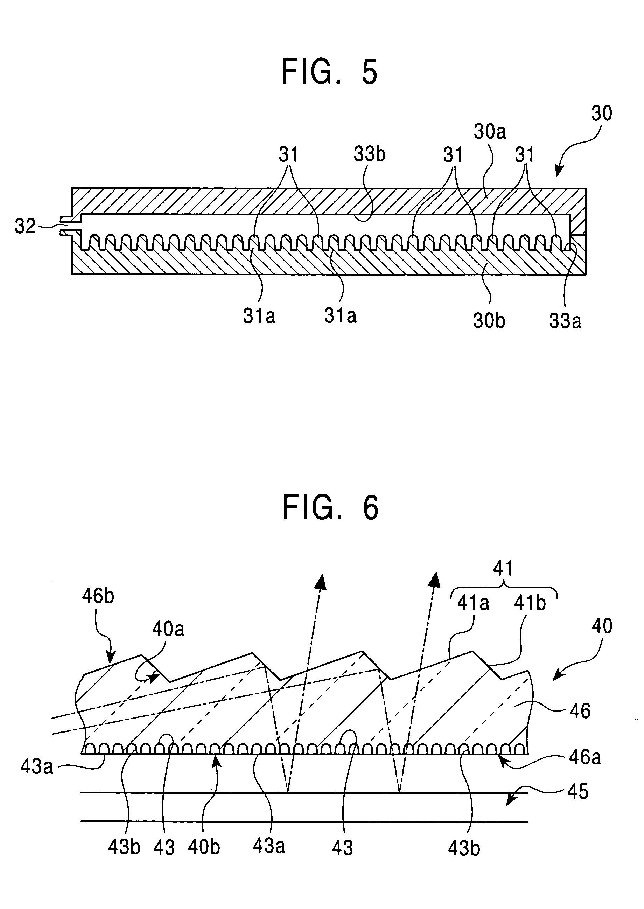

Next, an example of the structure of a mold (a mold for forming an anti-reflective film) will be described with reference to Figs. 5 and 2. A mold 30 for forming the anti-reflective film of the present invention comprises an upper mold 30a and a lower mold 30b both of which are combined together. The upper mold 30a has a second inner surface 33b for forming the second surface functioning as the attachment surface 18b of the anti-reflective film 17. The lower mold 30b has a first inner surface 33a for forming the first surface functioning as the reference surface 18a of the anti-reflective film 17, and many micro protrusions 31 extending from the first inner surface 33a to the second inner surface 33b of the upper mold 30a. The outlines of the holes 19 of the anti-reflective 17 are patterned by the protrusions 31, and the openings 20a of the holes 19 are patterned by the bottoms 31a of the protrusions 31. Furthermore, an injection port 32 is formed at ends of the upper mold 30a and the lower mold 30b, for injecting a construction material of the anti-reflective film 17 into the mold 30. In forming the anti-reflective film 17 by using the mold 30, the mold 30 is set in an injection molding machine, and the melted construction material of the anti-reflective film 17, for example, a silicone resin, may be injected from the injection port 32. The many protrusions 31 of the lower mold 31 function to form the holes 19 of the anti-reflective film 17. After cooling, the upper mold 30a is separated from the lower mold 30b to remove a molding product, thereby easily forming the anti-reflective film 17.

In another embodiment of the present invention, the anti-reflective function may be imparted to the light guide. As shown in Fig. 6, a light guide plate (light guide) 40 comprises a light guide portion 46 having a second surface 46b on which an observation surface 40a is formed. The observation surface 40a comprises many triangular wedge-like micro grooves 41 each having a gently inclined surface 41a and a reflective surface (steeply inclined surface) 41b. The reflective surfaces 41b reflect the light propagated through the light guide plate 40.

An anti-reflective structure 40b is provided on the first surface 46a of the light guide portion 46 opposite to the observation surface 40a thereof. The anti-reflective structure 40b comprises many micro holes 43 each extending the first surface 46a in the thickness direction of the light guide plate. Each of the holes 43 has an opening 43a exposed at the first surface 46a, and a bottom 43b formed near the second surface 46b. Each of the bottoms 43b has a smooth quadratic surface. In the light guide plate (light guide) 40 comprising the anti-reflective structure 40b provided integrally therewith, when light is incident on the first surface 46a provided with the anti-reflective structure 40b, the light is not strongly reflected at a predetermined angle because the refractive index discontinuity at the interface between the constitutional material and air is relieved.

For example, when the optical path of the light incident on the light guide portion 46 from a light source is changed to the direction of the first surface 46a by the reflective surfaces 41b, the light is incident on the rear sides of the bottoms 43b of the holes 43 each having a smooth quadratic surface, and thus the quantity of light reflected again to the inside of the light guide portion 46 by the first surface 46a can be extremely decreased. Therefore, light can be effectively emitted from the first surface 46a of the light guide plate (light guide) 40.

In producing the light guide plate 40, the light guide plate 40 may be produced by injection molding using a pair of molds including a first mold having a surface for patterning grooves 41 which constitute the observation surface 40a, and a second mold having many protrusions for forming the holes 43 which constitute the anti-reflective structure 40b. In the use of the light guide plate 40 as a front light of a reflective liquid crystal display device 45, the visibility of the liquid crystal display surface can be rapidly increased. Since the anti-reflective structure 40b is integrated with the light guide plate 40, an anti-reflective film need not be attached to the light guide plate 40 to contribute to the simplification of the process for producing the front light.

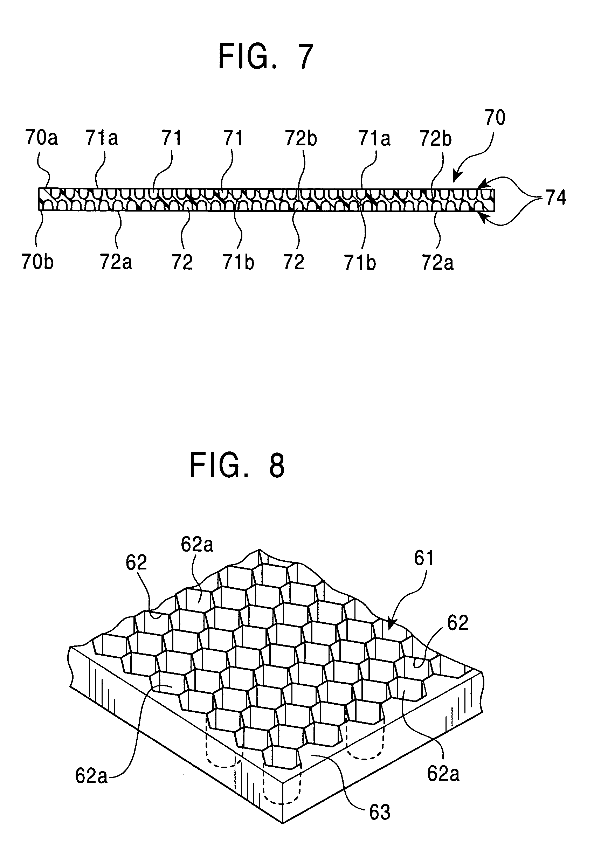

In a further embodiment, anti-reflective structures may be formed on both surfaces of an anti-reflective film. As shown in Fig. 7, an anti-reflective structure 74 is formed on each of a first surface 70a and second surface 70b of an anti-reflective film 70. Namely, the first surface 70a of the anti-reflective film 70 has many micro holes 71 extending in the thickness direction of the anti-reflective film 70. Each of the holes 71 has an opening 71a exposed at the first surface 70a, and a bottom 71b formed near the second surface 70b. The second surface 70b of the anti-reflective film 70 has many micro holes 72 extending in the thickness direction of the anti-reflective film 70. Each of the holes 72 has an opening 72a exposed at the second surface 70b, and a bottom 72b formed near the first surface 70a.

When the anti-reflective structures 74 are formed on both the first surface 70a and the second surface 70b of the anti-reflective film 70, the reflection of light incident on the first surface 70a of the anti-reflective film 70 and the reflection of light incident on the second surface 70b can be effectively prevented by the anti-reflective film 70.

On the other hand, each of the openings of the anti-refection structure is preferably formed in a polygonal shape, for example, a hexagonal shape. As shown in Fig. 8, the opening 62a of each of holes 62 constituting an anti-reflective structure 61 is formed in a hexagonal shape. The hexagonal openings 62a of the holes 62 can be arranged in a reference surface 63 with the maximum density, thereby mostly removing the connecting surface of the reference surface 63. Therefore, the ratio of the openings 62a to the reference surface 63 becomes maximum to increase the anti-reflective ability to the limit. When the area of each opening 62a is approximated to the area of an inscribed circle of a hexagon, the ratio of the openings 62a to the whole of the reference surface 63 is set to, for example, 75% to 85%. Although the area of the connecting surface between the adjacent openings 62a is set to, for example, 15% to 25%, the ratio of the connecting surface can be further decreased.

### Examples

In order to confirm the properties of the anti-reflective structure of the present invention, verification was performed. In the verification, anti-reflective films comprising three types of anti-reflective structures were prepared by changing the hole pitch in three steps. Namely, injection molding was performed by using molds having protrusion pitches of 0.20 µm, 0.22 µm and 0.24 µm, respectively, for forming holes in the anti-reflective films to form the three types of anti-reflective films having hole pitches of 0.20 µm, 0.22 µm and 0.24 µm, respectively. As the material for the anti-reflective films, a silicone resin was used, and the holes were formed in a staggered arrangement. As a result of AFM (Atomic Force Microscopy) measurement of the surface shape of each of the three types of the anti-reflective films, it was confirmed that the holes were uniformly formed in a staggered arrangement in the reference surfaces of the anti-reflective films with pitches of 0.20 µm, 0.22 µm and 0.24 µm, respectively.

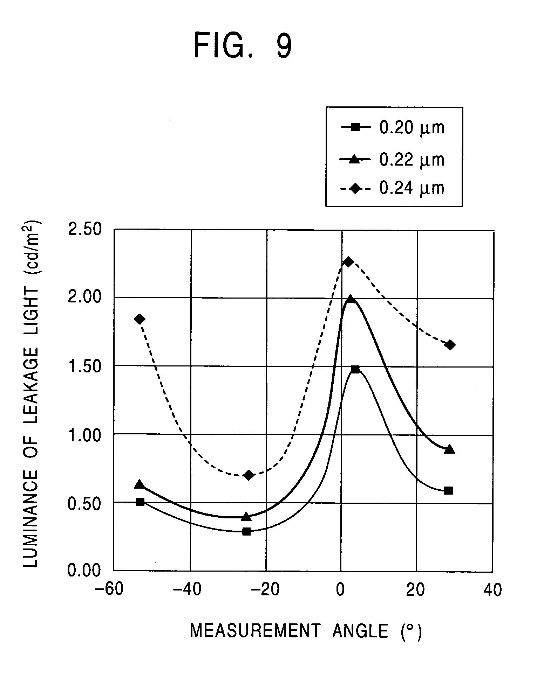

First, the surface (having the openings of the holes) of each of the three anti-reflective films was irradiated with white light from a white light LED light source, and leakage light from the surface of each anti-reflective film was measured. The leakage light was measured by moving a detector for detecting leakage light within a range of -30° to 30° on the assumption that a direction normal to the anti-reflective film was 0°, and inclination angles to opposite sides from the normal direction were the minus side and plus side, respectively. The results of measurement are shown in a graph of Fig. 9. The graph of Fig. 9 shows the angle of the detector as the abscissa, and the luminance (cd/m²) of leakage light as the ordinate.

Fig. 9 indicates that with any one of the angles, the leakage light decreases as the hole pitch decreases. Particularly, it is confirmed that with the anti-reflective film having a hole pitch of 0.20 µm, the maximum luminance is about 1.50 cd/m² near the angle of 0° where the leakage light becomes maximum, and thus the excellent anti-reflective effect is obtained. This suggests that excellent display quality such as high contrast and high luminance can be obtained when an anti-reflective film having a sufficiently small hole pitch is applied to a liquid crystal display device.

Next, in order to verify the relation between the opening diameter of holes and leakage chromaticity of an anti-reflective film having the anti-reflective structure of the present invention and find an optimum opening diameter of the holes, three types of anti-reflective films were prepared by changing the hole diameter in three steps. Namely, injection molding was performed by using molds having protrusions having bottom diameters of 0.25 µm, 0.30 µm and 0.40 µm, respectively, for forming holes in the anti-reflective films, to form three types of anti-reflective films having hole opening diameters of 0.25 µm, 0.30 µm and 0.40 µm, respectively. As the material for the anti-reflective films, a silicone resin was used, and the holes were formed in a staggered arrangement.

As a result of AFM (Atomic Force Microscopy) measurement of the surface shape of each of the three types of the anti-reflective films, it was confirmed that the holes were uniformly formed in a staggered arrangement in the reference surfaces of the anti-reflective films with opening diameters of 0.25 µm, 0.30 µm and 0.40 µm, respectively. Also, a conventional anti-reflective film having an AR lattice comprising an irregular surface formed by evaporation was prepared as a comparative example.

In measurement, each of the anti-reflective films having the three opening diameters was attached to a light guide plate made of a transparent resin, and the light guide plate was irradiated with white light from a white LED light source to measure a leakage chromaticity at the surface of each anti-reflective film. Also, the conventional anti-reflective film having the AR lattice comprising the irregular surface was attached to a light guide plate made of a transparent resin, and the light guide plate was irradiated with white light from a white LED light source to measure a leakage chromaticity at the surface of the conventional anti-reflective film.

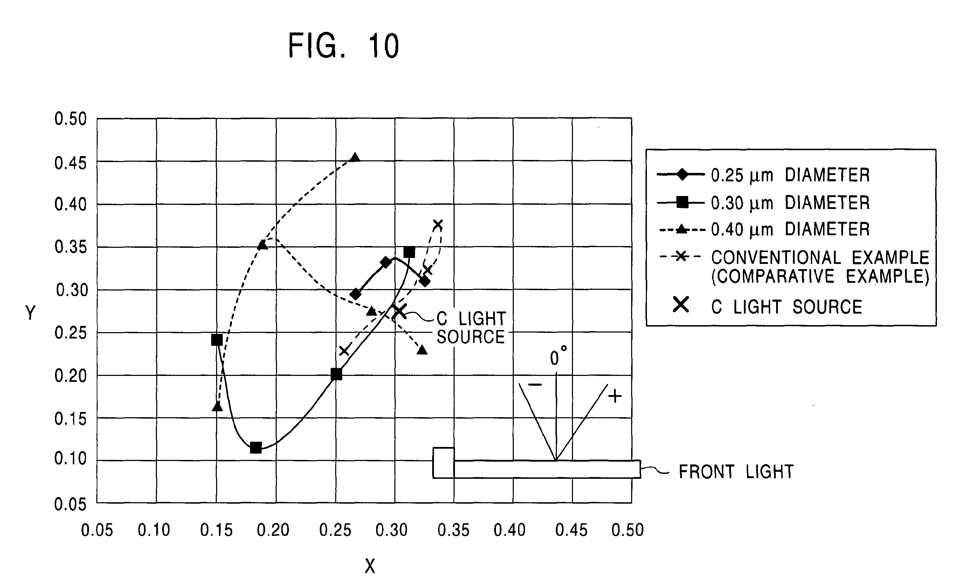

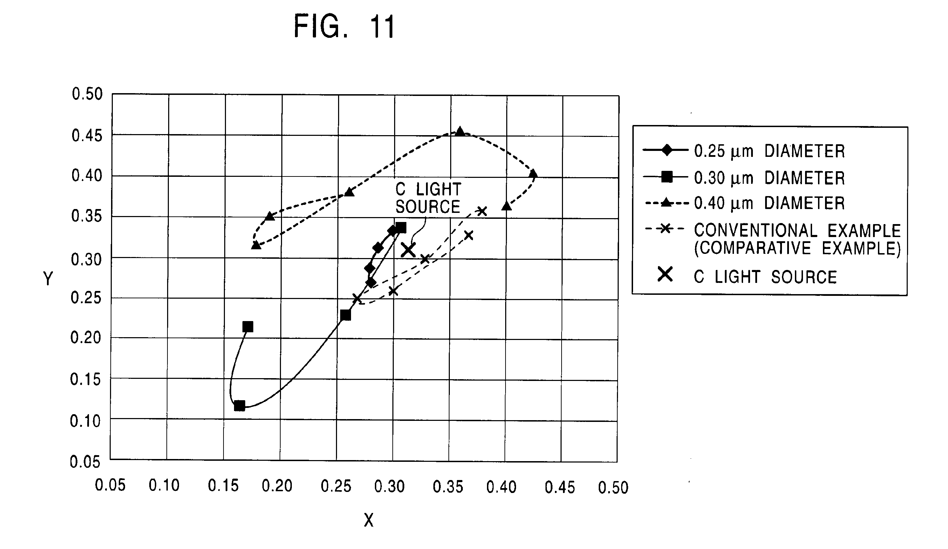

The leakage light was measured by moving a detector for detecting leakage light within a range of -30° to 30° on the assumption that a direction normal to the light guide plate was 0°, and inclination angles to opposite sides from the normal direction were the minus side and plus side, respectively. The results of measurement are shown in Fig. 10. The leakage light was also measured by moving a detector for detecting leakage light within a range of -30° to 30° on the assumption that a direction parallel to the anti-reflective film was 0°, and an inclination angle to opposite sides from the normal direction were the minus side and plus side, respectively. The results of measurement are shown in Fig. 11. Each of the Figs. 10 and 11 is an xy chromaticity diagram in which a C light source (white) is marked with ×.

Figs. 10 and 11 indicate that the dependency of chromaticity on the angle decreases as the hole opening diameter of the anti-reflective film decreases, and the chromaticity values are concentrated near the C light source. It was also found that in the anti-reflective film having a hole opening diameter of 0.25 µm, the chromaticity values are concentrated near the C light source without greatly deviating from the C light source. This suggests that by applying an anti-reflective film having such a small hole opening diameter to a front light of a liquid crystal display device, no color is observed in a display even when a liquid crystal panel is observed in an oblique direction, and the liquid crystal panel has high display color reproducibility. Since the chromaticity distribution and coloring decrease as the hole pitch deceases, an anti-reflective film with a smaller hole pitch is said to be excellent in color reproducibility.

Furthermore, it is found that the anti-reflective films having hole opening diameters of 0.30 µm and 0.40 µm, respectively, have large dependency of chromaticity on the angle, and the chromaticity values greatly deviate from the C light source. This suggests that with a hole opening diameter of 0.30 µm or more, significant coloring is observed in a display of a liquid panel when the anti-reflective film is applied to a front light of a liquid crystal display device, and the liquid crystal panel has low color reproducibility. It is also found that the conventional anti-reflective film comprising the AR lattice having the irregular surface formed by evaporation has high dependency of chromaticity on the angle, and shows a deviation from the C light source, as compared with the anti-reflective film of the present invention having a hole opening diameter of 0.25 µm. It is thus confirmed that the anti-reflective film of the present invention having a hole opening diameter set to a small value has excellent color reproducibility, as compared with the conventional anti-reflective film comprising the AR lattice.

Furthermore, the relationship between reflectance and the ratio of the hole openings to the connecting surface of the anti-reflective structure was verified. In the verification, four types of anti-reflective film forming molds were prepared. The four types of molds included a mold A having a connecting surface area ratio of 18.2% and a protrusion height of 433 nm, a mold B having a connecting surface area ratio of 24.8% and a protrusion height of 429 nm, a mold C having a connecting surface area ratio of 27.9% and a protrusion height of 399 nm, and a mold D having a connecting surface area ratio of 39.0% and a protrusion height of 379 nm. The connecting surface area ratio is the ratio of the connecting surface, excepting protrusions for patterning the holes of the anti-reflective structure, to the area of the forming surface, and the protrusion height corresponds to the hole depth. Anti-reflective films A to D comprising four types of anti-reflective structures were formed by injection molding using the molds A to D, respectively. The surface shape of each of the four types of the anti-reflective films A to D was measured by AFM. As a result, it was confirmed that the ratios of the opening areas to the reference surfaces of the anti-reflective films A, B, C and D were 81.8%, 75.2%, 72.1% and 61.0%, respectively, and the holes were uniformly formed in a staggered arrangement. It was also confirmed that the hole depths of the anti-reflective films A, B, C and D were 433 nm, 429 nm, 399 nm and 379 nm, respectively.

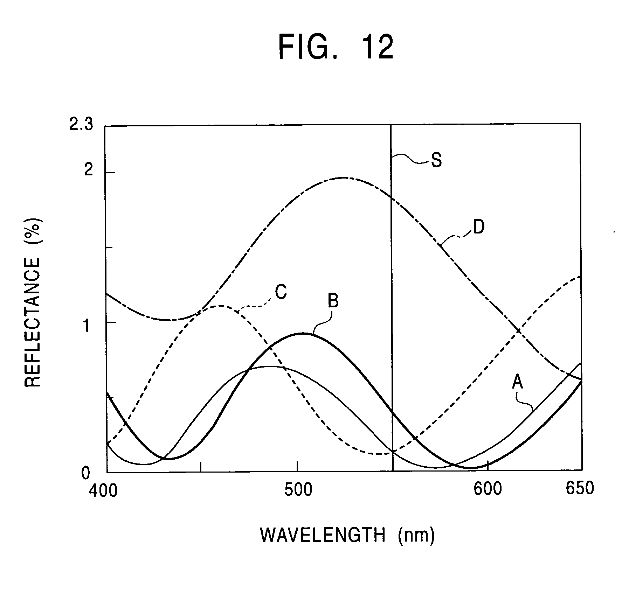

The surface (having the hole openings formed therein) of each of the four anti-reflective films A to D having different ratios of the opening areas to the reference surfaces was irradiated with light at wavelengths changing from 400 nm to 650 nm to measure the reflectance at the surface of each anti-reflective film. Fig. 12 shows the reflectance of each of the anti-reflective films A to D immediately after the formation using the molds A to D, respectively.

It is confirmed by Fig. 12 that the reflectance of the anti-reflective film decreases as the area ratio of the hole openings to the reference surface increases. Particularly, in order to improve the visibility of a liquid crystal display device comprising an anti-reflective film, it is important to decrease the reflectance near a wavelength of 550 nm shown by a solid line S in Fig. 12 because a wavelength of 550 nm is close to visible light.

The results shown in Fig. 12 reveal that the anti-reflective film having an opening area ratio of 70% to 85%, particularly 72% to 82%, relative to the reference surface can suppress reflectance to a low level. Particularly, it is found that at a wavelength of 400 nm to 650 nm in the wavelength region near visible light, the reflectance of the anti-reflective film can be effectively suppressed when the opening area ratio to the reference surface is set to 72% to 82%. Fig. 12 indicates that in order to decrease the reflectance to 1% or less, the opening area ratio to the reference surface is preferably set to 72% or more.

The above-described results of verification indicate that in order to obtain an anti-reflective film having low reflectance and an excellent leakage chromaticity, it is effective to decrease the hole diameter, decrease the hole pitch as much as possible, and increase the area ratio of hole openings to a reference surface.

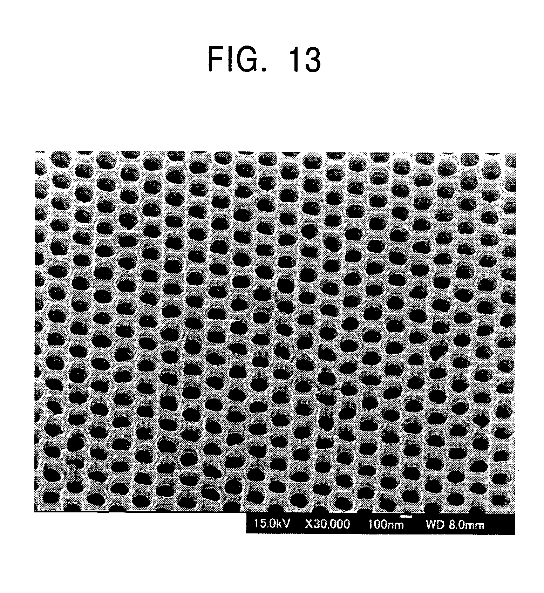

Fig. 13 is an electron microscopic picture with a magnification of x30,000 of an anti-reflective film having an anti-reflective structure according to the present invention. In microscopic observation of the anti-reflective film, the openings of holes were arranged in a reference surface, and a connecting surface for connecting the openings was formed at a very low ratio.

As described in detail above, the present invention provides an anti-reflective structure capable of preventing reflection of external light or illuminating light to significantly improve the visibility of a display portion displayed with the external light or illuminating light. The anti-reflective structure comprises many micro holes which relieve refractive index discontinuity at the interface between the structural material and air, thereby effectively preventing reflected light in a predetermined direction. The anti-reflective structure of the present invention comprises the micro holes formed in a first surface (reference surface), and thus facilitates the formation of the structure and permits an anti-reflective film having the anti-reflective structure to be effectively produced at low cost. The anti-reflective structure comprises the holes extending from the first surface (reference surface) to a second surface without protrusions protruding from the first surface, and thus the possibility of a decrease in the anti-reflective ability can be avoided even when pressure is applied to the anti-reflective structure.

The ratio of the hole openings to the first surface is preferably set to 75% to 85% per unit area. The refractive index discontinuity at the interface between the structural material and air can be relieved by increasing the ratio of the hole openings, thereby suppressing reflected light in one direction and improving the anti-reflective ability of the anti-reflective structure. When the reflectance of the anti-reflective structure is set to 1% or less, deterioration in visibility due to reflection is mostly avoided in a liquid crystal display device or the like to which the anti-reflective structure is applied. When the bottom of each hole is formed in a quadratic surface without a flat surface, the anti-reflective ability of the anti-reflective structure can be significantly improved. Also, when the opening of each hole is formed in a polygonal shape and the openings are disposed in a staggered arrangement, the holes can formed with the highest density in the first surface, thereby producing substantially no flat surface, which reflects light, in the surface of the anti-reflective film. The anti-reflective ability can be significantly improved by increasing the formation density of the holes.

The present invention provides a light guide comprising an anti-reflective structure having many micro holes each having an opening along a first surface and a bottom facing a second surface opposite to the first surface and extending from the opening to the bottom, and a reflective structure having many micro grooves formed along the second surface. The light guide can diffuse incident light by the many micro holes to effectively prevent the occurrence of reflected light in a predetermined direction. Since the light guide comprises the reflective surface and the anti-reflective structure both of which are integrally formed, the number of component members can be decreased when the light guide is applied to a front light or the like.

When such a light guide is applied to an illuminating device, the illuminating device capable of preventing surface reflection can be realized. When the illuminating device is applied to a liquid crystal display device, the liquid crystal display device having decreased surface reflection, high contrast and excellent visibility can be provided.

A mold for forming an anti-reflective film of the present invention facilitates the formation and can produce an anti-reflective film having an anti-reflective structure with an excellent anti-reflective ability.

## Claims

1. An anti-reflective structure comprising many micro holes each having an opening at a first surface and a bottom facing a second surface opposite to the first surface, each hole extending from the opening to the bottom.

2. The anti-reflective structure according to claim 1, wherein the ratio of the openings to the first surface is set to 70% to 85% per unit area.

3. The anti-reflective structure according to claim 1, wherein the reflectance is set to 1% or less.

4. The anti-reflective structure according to claim 1, wherein the bottom of each hole has a quadratic surface.

5. The anti-reflective structure according to claim 1, wherein the opening of each hole has a polygonal shape.

6. The anti-reflective structure according to claim 1, wherein the openings are disposed in a staggered arrangement in the first surface.

7. An anti-reflective film comprising an anti-reflective structure according to claim 1 which is formed on at least one of the front face and the rear face of the film.

8. A light guide comprising:
an anti-reflective structure having many micro holes each having an opening at a first surface and a bottom facing a second surface opposite to the first surface, each hole extending from the opening to the bottom; and
a reflective structure having many micro grooves formed in the second surface.

9. An illuminating device comprising a light guide according to claim 8, and a light source for irradiating the light guide.

10. A liquid crystal display device comprising an illuminating device according to claim 9, and a liquid crystal display unit.

11. A mold for forming an anti-reflective film comprising an anti-reflective structure having many micro holes each having an opening at a first surface and a bottom facing a second surface opposite to the first surface, each hole extending from the opening to the bottom, the mold comprising a first inner surface for forming the first surface, a second inner surface for forming the second surface, and many micro protrusions protruding from the first inner surface to the second inner surface for patterning the outlines of the holes.

12. The mold for forming an anti-reflective film according to claim 11, wherein the protrusions are disposed in a staggered arrangement.
